# EUROPEAN PATENT APPLICATION

(11) **EP 2 894 622 A1**
(43) Date of publication of application: **15.07.2015**
(21) Application number: 14275005.8
(22) Date of filing: 10.01.2014
(51) Int. Cl.: G08G 5/00, G08G 5/02, G01S 19/15, G01S 1/02, G01S 5/00

(54) **Precision guidance method and system for aircraft approaching and landing**

(71) Applicant: Teia Limited, London W16 8DH (GB)
(72) Inventor: Mariani, Carlo, Montecarlo (MC)
(74) Representative: Di Bernardo, Antonio

(57) **Abstract**

The present invention relates to a method of precision guidance to the approaching and landing aircraft such as helicopters, aircraft and the like, which comprises at least the step of using a GPS position data transmitted by the aircraft to identify the alignment/misalignment of the aircraft with respect to the desired path and a step of receive a signal indicative of the alignment/misalignment of the aircraft with respect to the path; further object of the invention is also a system for the implementation of said method.

## Description

### FIELD OF THE INVENTION

The present application relates to precision guidance systems for the aircraft approaching and landing

These systems provide the pilot with the precise alignement of the aircraft to the desired approach path, such that the aircraft is guided to the desired destination (eg a runway, an helipad, an helideck or similar).

### BACKGROUND OF THE INVENTION

Whenever necessary to land an aircraft in a landing space is useful for the pilot to have information that highlight the current alignment of the aircraft with respect to the desired approach and landing path.
"Approach and landing path" is intended to indicate, in this description and in the claims that follow, a series of three-dimensional spatial positions that are, in fact, a path that the aircraft must follow during the last part of the flight, before touchdown, allowing the correct execution of the approach and landing itself.

The information the pilot must have is particularly important when obstacles are close to the approach path.

Particularly, critical examples of such situations, are those of the landing of aircraft on offshore platforms (eg. Oil & Gas platforms or wind generators platforms where the blades of the windmills constitute particularly dangerous obstacles).

With regard to the Oil & Gas platforms for example, consider that they are in general far enough from the shore (up to 200 miles), therefore the approach path is clear of obstacles up to a certain distance from the platform, but the same conformation of the platform makes the final approach and landing phase particularly critical, because of the several obstacles present nearby the helideck.

In addition, the Oil & Gas platforms are brightly lit and frequently disturbed by severe and variable metereological conditions (fog, rain, wind waves, etc.)..

Referring now to the windfarms, the helidecks are usually closer to the coast, but the approach path has a narrow amplitude (in the sense that the safe approach corridor between the windmills is narrow) because of the location, the arrangement and geometry of the windfarm itself: for example, in some windfarms the approach path has a width of only 150 meters between the windmills.

The approach and landing path can be ideally divided into two portions:
- the approach path (in general, up to a few hundred meters from the landing space) and
- the landing path (from few hundred meters to touchdown).

Currently known alignment guidance systems include three main types of solutions:
ground systems, which have installations / components only on the ground,
on-board systems, which have installations / components only on board the aircraft and
integrated systems, which have installations / components both on ground and on board the aircraft.

A ground system very popular for helicopters is the HAPI (Helicopter Approach Path Indicator), a visual alignment guidance system that is used in Visual Meterological Conditions (VMC), i.e. those weather conditions in which Visual Flight Rule (VFR) is allowed and the pilot has sufficient visibility to fly the aircraft while maintaining a separation in view of the ground and other aircraft.

When the VMC does not exist, the VFR is not possible.

The HAPI works on the principle of colored light sectors visible from the pilot that are indicative of the vertical alignment of the aircraft with respect to the desired glide path.

The signal format of the HAPI include four discrete signal sectors, providing an "above slope", an "on slope", a "slightly below" and a "below slope" signal.

This system, although widely used, has some limitations.

A first problem is related the lighting of the platform: this lighting normally can not be reduced or turned off and interferes with the visual guidance information displayed by the HAPI to the pilot, and therefore confuse him.

Moreover, a HAPI system that is intended for installation on a floating helideck should afford a stabilization of the beam, with an increased cost.

Finally, because the approach and landing area on oil rig may occurr within a space of 210deg wide, the HAPI system should be installed on a turntable base to achieve a larger azimuth coverage.

A further problem , particularly acute in the area of platforms, comes from the adverse weather conditions (eg fog, haze) that make it almost impossible for the pilot the VFR approach.

Finally, the HAPI provides information only when the aircraft is already inside the glide path and only the alignment / misalignment in elevation (but not in azimuth) of the aircraft from the center of the beam.

A known system available and installed on board the aircraft is the Global Positioning System (GPS), a satellite navigation and positioning system for civil use, through a satellite network dedicated to artificial satellites in orbit; it provides a terminal Mobile or GPS receiver information about its geographical coordinates and time, in any weather conditions, anywhere on Earth or in its immediate vicinity where there is an unobstructed contact with at least four satellites of the system.

The localization is via the transmission of a radio signal from each satellite and processing on board the signals received by the receiver.

From the point of view of the support during the approach and landing, GPS -based systems have the inherent limitation of not providing feedback from the ground to the pilot of the aircraft alignment/misalignment with respect to the desired approach path: in case of error or failure of the GPS systems onboard, the pilot of the aircraft would not have a ground reference for comparison with subsequent risk of safety in the approach phase.

This inconvenience is worsened by the imprecision inherent in GPS devices on board, which are not able to determine exactly the position of the aircraft with a precision sufficient to allow use as a guide during the approach and landing.

Another known system, of the integrated type, goes under the name of the Instrument Landing System (ILS).

An ILS is a ground-based instrument approach system that provides precision guidance to an aircraft approaching and landing on a runway, using a combination of radio signals and, in many cases, high-intensity lighting arrays to enable a safe landing in Instrument Meteorological Conditions (IMC), such as low ceilings or reduced visibility due to fog, rain, or blowing snow.

An instrument approach procedure chart (or approach plate) is published for each ILS approach to provide the information needed to fly an ILS approach during Instrument Flight Rules (IFR) operations.

A chart includes the radio frequencies used by the ILS components or navaids and the prescribed minimum visibility requirements

An aircraft approaching a runway is guided by the ILS receivers in the aircraft by performing modulation depth comparisons.

Generally speaking, an ILS consists of two independent sub-systems:
the Localizer (LOC, or LLZ) that provides lateral guidance;
the Glide Slope (GP) that provides vertical guidance.

A Localizer is an antenna array normally located beyond the departure end of the runway and generally consists of several pairs of directional antennas.

Two signals are transmitted on one of 40 ILS channels.

One is modulated at 90 Hz, the other at 150 Hz.

These are transmitted from co-located antennas.

Each antenna transmits a narrow beam, one slightly to the left of the runway centerline, the other slightly to the right.

The localizer receiver on the aircraft measures the difference in the depth of modulation (DDM) of the 90 Hz and 150 Hz signals. The depth of modulation for each of the modulating frequencies is 20 percent; the difference between the two signals varies depending on the deviation of the approaching aircraft from the centerline.

If there is a predominance of either 90 Hz or 150 Hz modulation, the aircraft is off the centerline.

In the cockpit, the needle on the instrument part of the ILS (the omni-bearing indicator (nav indicator), horizontal situation indicator (HSI), or course deviation indicator (CDI)) shows that the aircraft needs to fly left or right to correct the error to fly toward the center of the runway.

If the DDM is zero, the aircraft is on the LOC centerline coinciding with the physical runway centerline. The pilot controls the aircraft so that the indicator remains centered on the display (i.e., it provides lateral guidance).

A Glide Slope (GS) station is an antenna array sited to one side of the runway touchdown zone.

The GS signal is transmitted on a carrier frequency using a technique similar to that for the localizer: the center of the glide slope signal is arranged to define a glide path of approximately 3° above horizontal (ground level), the beam is 1.4° deep (0.7° below the glide-path center and 0.7° above).

The aircraft is equipped with a ILS receiver and display that is able to graphically represent the intensity of each of the tones in the received radio signals transmitted from the antennas on the ground, in order to provide the pilot an indication on the alignment / misalignment.

The pilot then controls the aircraft so that the glide slope indicator remains centered on the display to ensure the aircraft is following the glide path to remain above obstructions and reach the runway at the proper touchdown point (i.e. it provides vertical guidance).

As much used and precise, the ILS system, however, presents some drawbacks: due to the complexity of ILS localizer and glide slope systems, there are some limitations.

Localizer systems are sensitive to obstructions in the signal broadcast area like large buildings or hangars. Glide slope systems are also limited by the terrain in front of the glide slope antennas.

If terrain is sloping or uneven, reflections can create an uneven glidepath causing unwanted needle deflections.

Additionally, since the ILS signals are pointed in one direction by the positioning of the arrays, glide slope supports only straight-line approaches with a constant angle of descent.

Furthermore, installation of an ILS System can be costly because of siting criteria and the complexity of the antenna system.

### BRIEF SUMMARY OF THE INVENTION

Purpose of the present invention is to overcome the disadvantages of the already known systems.

Another purpose of the present invention is to make available a method, and a corresponding system that implements this method, of alignment guidance for aircraft approach and landing that is relatively simple to install, use of maximum degree technologies, relatively economical and safe and is simple to use by pilots, without requiring a specific training from scratch of the same.

A scope of the invention is to make available a method and a relative system that is of help to the pilots not only during the approach phase, but also in the landing phase, thus improving in instrumental way the visual approach (VFR) currently used.

A first object of the invention is a method of precision guidance to the approaching and landing aircraft, such as helicopters, airplanes and others as claimed in claim 1 here enclosed.

Another object of the present invention is a system that implements the method described in said first claim.

Optional features of the advantageous method and system are contained in the claims, which are to be considered as an integral part of the present description.

Briefly, the idea underlying the present invention is to make available a method in which it is provided an onboard (on the airplane) detection of data indicative of the spatial position (GPS) of the approaching aircraft using an Automatic Dependent Surveillance - Broadcast (ADS-B) data link on board the aircraft; the method further provide to trasmit those GPS data from the aircraft to a ground station (preferably a ground station near a landing space or place): said ground station correct those GPS data on the basis of DGPS data (which are more accurate) so as to generate correct set of GPS data indicative of the airplane position.

Those corrected GPS data are then compared, in the ground station, to a set of eligible positions (indicative of a correct approach/landing path) for computing the alignment /misalignment of the aircraft position on the basis of said comparation.

Then, said ground station trasmit a signal indicative of the alignment/misalignment of the aircraft to the aircraft itself, which signal is reproduced in a way perceptible by the pilot.

Going deeply in the invention, through the ADS-B technology the aircraft determines its own position via GNSS and periodically broadcasts this via a radio frequency.

The message transmitted by the aircraft type is to be seen as a "broadcast" signal, because the transmitter is not interested in who receives the message.

This technology is of type so-called "automatic", because the message that contains the information for the location is sent periodically from the aircraft without the direct intervention of operators nor necessarily is solicited from the outside.

Any ADS-B equipped receivers are informed in a standard way about the position, altitude and speed of the aircraft in flight in the airspace nearby.

An aircraft or, more generally a vehicle, equipped with ADS-B transmitter, is able to calculate its own position, altitude and speed and send periodically broadcast so that any ADS-B receivers are able to identify the position, speed and direction of the vehicle.

It is noted as of now that ADS-B is going to be installed on most aircraft in the next years and therefore this is not a cost / limit the present invention. After the sending of the data in broadcast mode , the data is received by a ADS-B receiver installed in a ground station, located in the vicinity of a landing space.

The correction (re-calculation) of the GPS data trasmitted by the airplane is to be made on the ground station, by applying at least the corrections to obtain more accurate GPS data, which better represent the actual spatial position of the airplane.

This allows to compare the corrected GPS data with data eligible positions of a desired approach path, both in azimuth and in elevation.

This comparation allows to determined the alignment/misalignment of the aircraft with respect to said approach (or landing) path, so as to be able to generate a signal to be perceived by the pilot, indicative of said alignment/misalignment.

It succeeds in this way to realize a high-precision system, inexpensive, and that requires minimal changes to the existing structures.

Using the method and the system of the invention in fact is not necessary, for example, install the radiating antennas on ground, as required by the ILS, with all the advantages that this entails.

The method and system of the invention also allows to have a guidance also in the final stage of the approach path, or in the landing phase.

Furthermore, in a preferred embodiment, the signal trasmitted by the ground station to the airlane is a ILS-type signal, so that the alignment of the aircarft is detectable by the ILS receiver onboard the aircraft.

This allows not only to prevent the installation of additional receivers specially dedicated, but also to avoid having to carry out specific courses of learning and training for pilots, as a matter of fact they can simply use the ILS instrument onboard as they usually do.

As will be better described after, the method and the system of the invention use the same communication channels used by the standard ILS systems (VHF & UHF), as well as the standard ADS-B link (between the aircraft and the ground station) and do not require new equipment on board the aircraft.

Additionally, information on the alignment of the aircraft on the approach path are coded in a variety of forms, to be available on board the aircraft.

In a preferred embodiment, the method and the system of the invention use only audio channel, preferably VHF, to transfer the encoded information that simulate a ILS-like system: in this case, a display device, suitable for the purpose, will be installed on board.

### BRIEF DESCRIPTION OF THE DRAWINGS

The invention will be described below with reference to non-limiting examples, which are provided for explanatory purposes and not limitative in the appended drawings. These drawings illustrate different aspects and embodiments of the present invention and, where appropriate, reference numerals illustrating structures, components, materials and / or similar elements in different figures are indicated by similar reference numbers.

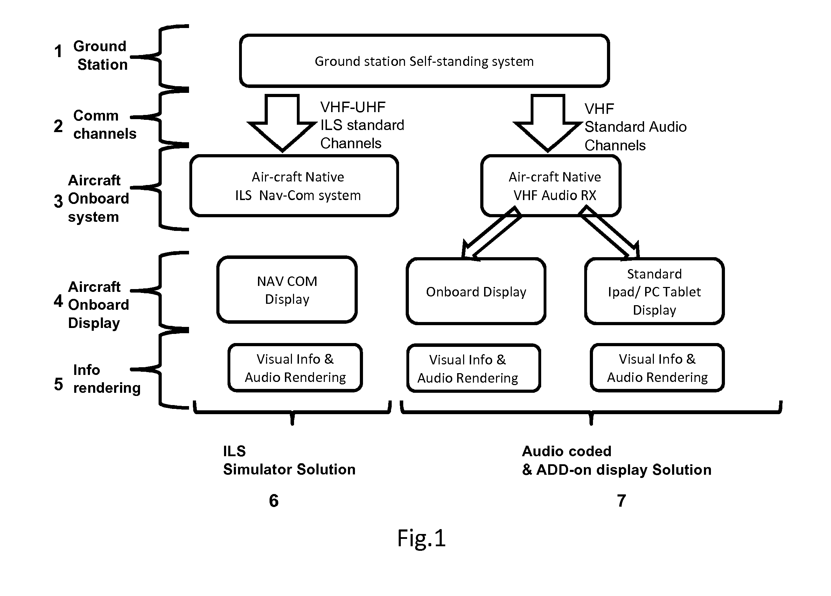

Figure 1 illustrates an overall scheme of different variants of the way the information about the alignment/disalignment status is transpitted from the ground station to the on-board equipment and then communicated to the pilot.;

Horizontal sections 1-6 describe the various steps of the information workflow: from the ground station (1) though alternative communication channels (2) and on-board receivers (3), to alternative on-board display devices (4), to be finally rendered to the pilot (5).

Vertical section (6) represent the ILS-like alternative implementation, while vertical section (7) represents the independent audio/visual solution cased either on standard VHS on-board equipment or special purpose on-board devices.

### DETAILED DESCRIPTION OF THE INVENTION

While the invention is susceptible to various modifications and alternative constructions, certain illustrated embodiments relating are shown in the drawings and will be described below in detail.

It should be understood, however, that there is no intention to limit the invention to the specific illustrated embodiment but, on the contrary, the invention is intented to cover all the modifications, alternative constructions, and equivalents that fall within the invention as defined in the claims.

The use of " e.g. ", " etc. " , "or" indicates non-exclusive alternative without limitation unless otherwise indicated. The use of "includes" means "includes, but is not limited to" unless otherwise indicated.

The terms "horizontal" and "vertical " refer to directions perpendicular and parallel respectively to those of the vector "g" of the gravity force, that the two terms are to be understood analogously to the common use.

In its generality, the method of the invention is adapted to provide a precise guidance to the approaching and landing aircraft, such as helicopters, airplanes, UAVs and others; in the following the term "aircraft" will be used to indicate generally all those kind of flying vehicles, without limitation.

The method according to the invention comprises the steps of:
a. onboard of an aircraft provided with an ADS-B system, detecting GPS data indicative of at least one between position, altitude, speed and7or direction of said aircraft, said GPS data being collected by means of said ADS-B system installed on the aircraft,
b. transmitting said GPS data through a transmitter, onboard of the aircraft, using an ADS-B broadcasting protocol,
c. receiving, in a ground station near a landing place, said GPS data by means of an ADS-B receiver installed in said ground station,
d. in said ground station, processing said GPS data by applying at least corrections to obtain a corrected GPS data relative to the aircraft,
e. in said ground station, comparing the corrected GPS data with a plurality of eligible positions, part of a pre-defined approach path to said landing place,
f. in said ground station, computing the alignment /misalignment of the aircraft position on the basis of the comparation at point e.
g. in said ground station, trasmitting a signal indicative of the alignment/misalignment of the aircraft
h. onboard of said aircraft, receiving said signal indicative of the alignment/misalignment of the aircraft and reproducing a signal perceptible by a pilot, indicative of the alignment/misalignment of the aircraft.

In this regard, the system of the invention is functionally divided into two main parts, one on ground and the other aboard the aircraft:
a ground station positioned in the vicinity of the landing space, comprising a computing unit designed to process the data,
a device installed on the aircraft itself, indicative of alignment/misalignment of the aircraft.

The ground station includes, in addition to the processing unit, a ADS-B Mode-S receiver (preferably compatible with both the U.S. and European standards) and antennas, a differential GPS (DGPS) station with relative antenna and, in the preferred form, a transmitter capable of generating an ILS signal with the corresponding antennas.

Preferably, the ground station also includes an IP connection to a network, possibly the GPRS type.

Optionally, the ground station also includes a transmitter on VHF audio band (118/136Mhz).

One of the major subsystems of the ground station is the SCC control system, which can be housed for example in a case realized according to a suitable IP case and locked.

The SCC control system in turn comprises a control unit SCU of the system intended to supplement the processing unit that runs the operating program and manages the communication protocols, the memory unit, the sensors, actuators and all physical interfaces (hardware) may be present.

A redundancy of the subsystems of the ground station can be optionally added, for safety purposes: the configuration and management of these redundancies is not described here in detail, because it fully is the scope of the skilled in the art.

In some variations, the ground station may include or interface with local meteorological sensors (wind, temperature, rain, etc.) to receive data indicative of a weather condition and send them if requested to the approaching aircraft.

In essence, the method and the system according to the invention provide that the ground station computes, on the basis of the GPS data received in real time from the aircraft (through the ADS-B link) and those available on ground (DGPS), the position of the aircraft, and to compare the latter to the proper landing path that can be seen as a plurality of eligible positions in the space.

The computation of the aircraft position can also carried out on the basis of its dynamics, i.e. taking into account the speed of the aircraft and the flight direction.

Such Intertial correction to GPS positioning are carries out with a number of well known techniques, including Kalman filters. See for reference:
- Kalman, R.E. (1960). "A new approach to linear filtering and prediction problems". Journal of Basic Engineering 82 (1): pp. 35-45
- Moriya, N. (2011). Primer to Kalman Filtering: A Physicist Perspective. New York: Nova Science Publishers, Inc.ISBN 978-1-61668-311-5.

The correct GPS data indicative of the position of the aircraft thus detected is then used to be compared with a plurality of eligible positions, which constitute the desired path of descent towards the landing position.

In a preferred embodiment, the ground station also includes a signal transmitter VHF / UHF ILS-type with its antennas and the display on board is also ILS-type; in this preferred embodiment of the step and of the method, it is expected to send said signal as a ILS-type signal.

More specifically the lateral alignment of the aircraft (azimuth) compared with a net intake (the landing path) is encoded by a prevalence of 90 Hz tone (right) or 150Hz (left) in an issue of a defined frequency range 328.60 and 335.40 MHz, and wherein the vertical deviation of the aircraft with respect to the desired path is encoded by a prevalence of 90Hz tone (high) or 150Hz (low) in an emission of a defined frequency between 108.10 and 111.95 MHz, so that said signal may be reproduced by a ILS-type receiver mounted on the aircraft.

In this way the information transferred to the aircraft and shown or reproduced to the pilot are the same as a traditional ILS and can be displayed on a standard display ILS-type, without the need to install antennas on the ground typical of the ILS system, nor that other displays must be installed in the aircraft.

In a different embodiment, it is possible to provide for transmitting the information indicative of a alignment/misalignment of the aircraft by means of a signal of audio type, for example through a VHF communication channel. In the latter case, the signal can be encoded in tones, according to a further improvement may use the same system to transfer at the same time also other relevant information.

In this case, the use of the ILS receiver installed on the aircraft is not essential and instead it can be used in its place a receiver / dedicated display or alternatively a portable device for reproducing such information, such as commercially available Tablet, Personal Computers or similar devices.

Again it is possible to show, in addition to the information of alignment, also additional information, such as photographs and drawings of the landing space, weather conditions in real time and more.

It is interesting to note that the additional information can be both detected in correspondence of the space landing, or can be sent to the ground station through the IP connection.

It is interesting to note that when it passes from the approach phase to the landing phase, the method and system of the invention can be used to provide the pilot an aid even in this last landing phase, which normally is carried out on the basis of purely visual indications.

In fact, in the final landing phase, the method and the system of the invention can provide the pilot not only with the information about the alignment with the desired position, but also the information about the position of the aircraft with respect to the touchdown area.

Such information shall contain indications of the distance, alignment and more.

The goals mentioned above are so achieved.

## Claims

1. Method of precision guidance to the approaching and landing of an aircraft, such as helicopters, airplanes and others, comprising the steps of:
a. onboard of an aircraft provided with an ADS-B system, detecting GPS data indicative of at least one between position, altitude, speed and/or direction of said aircraft, said GPS data being collected by means of said ADS-B system installed on the aircraft,
**characterized in that**
said method further comprises the step of:
b. transmitting said GPS data through a transmitter, onboard of the aircraft, using an ADS-B broadcasting protocol,
c. receiving, in a ground station near a landing place, said GPS data by means of an ADS-B receiver installed in said ground station,
d. in said ground station, processing said GPS data by applying at least corrections to obtain a corrected GPS data relative to the aircraft,
e. in said ground station, comparing the corrected GPS data with a plurality of eligible positions, part of a pre-defined approach path to said landing place,
f. in said ground station, computing the alignment /misalignment of the aircraft position on the basis of the comparison at point e.
g. in said ground station, trasmitting a signal indicative of the alignment/misalignment of the aircraft
h. onboard of said aircraft, receiving said signal indicative of the alignment/misalignment of the aircraft and reproducing a signal perceptible by a pilot, indicative of the alignment/misalignment of the aircraft.

2. Method according to claim 1, in which said signal indicative of the alignment/misalignment of the aircraft of the step g., h. is a signal of ILS-type.

3. Method according to the preceding claim, in which a lateral alignment of said aircraft (azimuth) with respect to an eligible position is encoded by a prevalence of 90Hz tone (right) or 150Hz (left) in an emission of a defined frequency between 328.60 and 335.40 MHz, and wherein a vertical alignment of said aircraft with respect to an eligible position is encoded by a prevalence of 90Hz tone (high) or 150Hz (low) in an emission of a defined frequency between 108.10 and 111.95 MHz, so that said signal may be reproduced in step h by an ILS receiver mounted on the aircraft.

4. Method according to one or more of the preceding claims, in which said signal indicative of the alignment/misalignment of the aircraft of the step g., h. is a signal of the audio type, preferably on a VHF channel.

5. Method according to one or more of the preceding claims, wherein additional data, other than those related to an alignment of the aircraft, are transmitted to said aircraft, said additional data being transmitted, preferably encoded, together with the said signal indicative of a alignment/misalignment of the aircraft.

6. Assistance System or instrumental aid for the landing phase of an aircraft, such as helicopters, airplanes, UAVs and similars,
**characterized by** the fact that
the Assistance System or instrumental aid realizes the method according to one or more of the preceding claims.

7. Assistance System or instrumental aid, according to the preceding claim, comprising a ground station, preferably placed near a landing space, provided at least with:
a processing unit,
an ADS-B receiver and antennas operatively connected to said processing unit,
a Differential GPS (DGPS) station with relative antenna operatively connected to the processing unit,
a device, on the aircraft, to playback a signal, perceptible by the pilot, indicative of an alignment/misalignment of the aircraft with respect to a landing path,
at least one of an ILS-type signal transmitter VHF/UHF and its transmitter antenna or a VHF transmitter of the audio band (118/136 Mhz).

8. Assistance System or instrumental aid according to the preceding claim, in which said ground station further comprises at least one between:
an IP connection to a network,
a local meteorological sensor, such as wind, temperature, rain or similar.

9. Assistance System or instrumental aid according to any one of claims 6 to 8, comprising, onboard of the aircraft, a playback device for reproducing a signal perceptible by a pilot, said signal being indicative of an alignment/misalignment of the aircraft, which comprises at least one between:
a display of ILS type signals,
a playback device comprising a display screen.
